# EUROPEAN PATENT SPECIFICATION

(11) **EP 3 058 573 B1**
(45) Date of publication and mention of the grant of the patent: **02.01.2019**
(21) Application number: 14866677.9
(22) Date of filing: 12.09.2014
(51) Int. Cl.: G21C 7/36, G21C 17/003, G21C 17/10, G21D 1/02, H04Q 9/00

(54) **WIRELESS TRANSMISSION OF NUCLEAR INSTRUMENTATION SIGNALS**
DRAHTLOSE ÜBERTRAGUNG VON KERNINSTRUMENTIERUNGSSIGNALEN
TRANSMISSION SANS FIL DE SIGNAUX D'INSTRUMENTATION NUCLÉAIRE

(30) Priority: 18.10.2013 US 201314057346
(43) Date of publication of application: 24.08.2016
(73) Proprietor: Westinghouse Electric Company LLC, Cranberry Township, PA 16066 (US)
(72) Inventor: MORRIS, Richard W., East Granby, Connecticut 06026 (US)
(74) Representative: Gallo, Wolfgang
(86) International application number: PCT/US2014/055390
(87) International publication number: WO 2015/080786

(56) References cited:
- JP-A- H03 181 889
- JP-A- 2008 286 664
- US-A- 5 021 210
- US-A- 5 712 886
- US-A1- 2007 201 601
- US-A1- 2011 085 633
- US-A1- 2012 177 166

## Description

### FIELD OF THE INVENTION

The present invention is directed to monitoring of a nuclear reactor pressure vessel. More particularly, the present invention is directed to a system and method for wirelessly monitoring a condition of a nuclear reactor pressure vessel.

### BACKGROUND OF THE INVENTION

A system and a method according to the pre-characterizing portions of the independent claims is disclosed in document US 2011/0 085 633 A1.

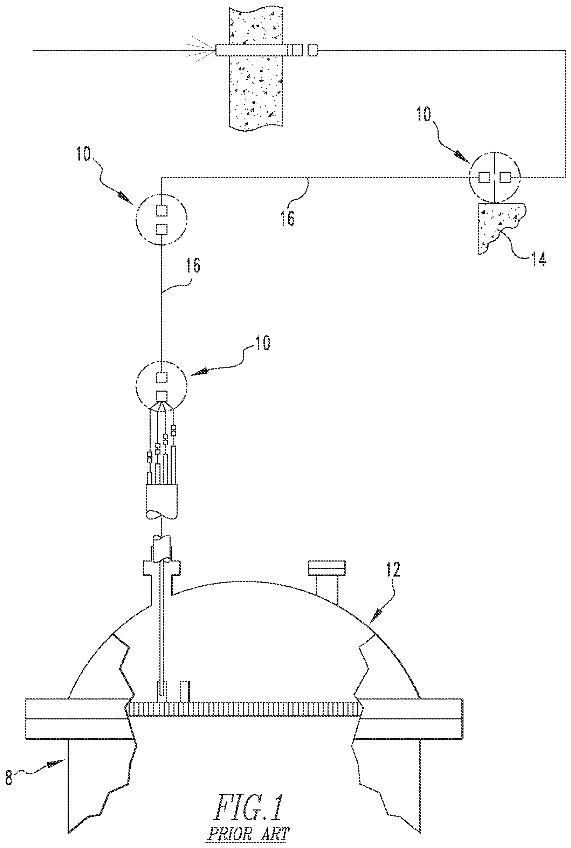

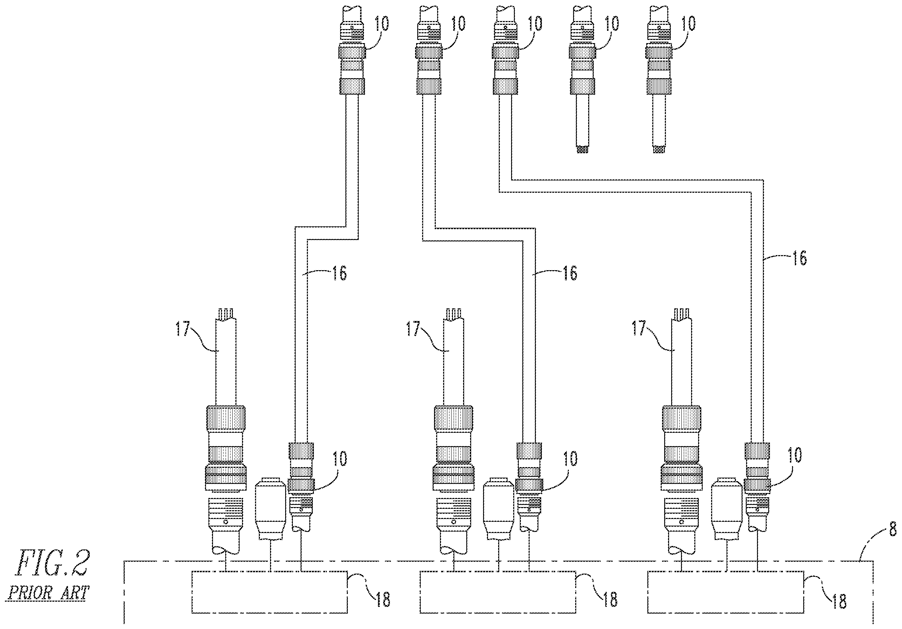

The mechanical movement (i.e. invention, withdrawal) and the associated monitoring of the position of the control rods are necessary functions for the operation of a nuclear reactor. Each of the instruments that perform this function typically is terminated with a power cable and one or two position indication cables that transmit signals from the instrument back to processing units, typically located in a control room. As used herein, the term instrument may also include a sensor or sensing device. Known rod position indicator cable systems, such as the one depicted in Figures 1 and 2, typically include multi pin connector disconnect points 10 located at the top of the nuclear reactor vessel head 12 and at the reactor cavity wall 14 poolside. Additional disconnect points 10 may also be located at other points between the vessel head 12 and the cavity wall 14. The multi pin connector disconnect points 10 allow each of the interconnecting cable sections 16 to be removed from corresponding sensing instruments 18 to allow for the disassembly of the reactor vessel 8 for refueling. The typical reactor vessel 8 includes on the order of magnitude of 100 or more of these cable assemblies.

The removal and installation of the cable sections 16 is generally part of the "critical path" schedule for a refueling outage and generally requires the services of a specially trained crew of technicians during both the initial and concluding stages of the refueling outage in order to complete the work. Typically, such work can take up to an entire shift to complete. In total, the manipulation of the signal cable sections 16 may occupy an entire day of a 30 days outage. Given an estimated cost of $20,000 to $25,000 per hour of lost critical path time, this one day period would represent a cost of approximately $500,000 per refueling outage without even taking into consideration the cost of the trained work crew.

Additionally, the repeated manipulation of the signal cables increases the potential for damage, leading to the need to repair and/or replace the cables and/or the related hardware. Furthermore, the manipulation of the signal cables must be carried out in a radiation area located above the reactor vessel. Elimination of this work scope would thus eliminate the radiation exposure associated with this work activity.

Accordingly, there exists room for improvement in the system and method for monitoring the position of the control rods and other reactor conditions.

### SUMMARY OF THE INVENTION

According to the invention, there is provided a system for monitoring a condition of a nuclear reactor pressure vessel according to claim 1 and a method of monitoring a condition of a nuclear reactor pressure vessel according to claim 8; specific embodiments of the invention are defined in the corresponding dependent claims.

### BRIEF DESCRIPTION OF THE DRAWINGS

A full understanding of the invention can be gained from the following description when read in conjunction with the accompanying drawings in which:
Figure 1 shows a schematic view of a known system for monitoring the condition of a nuclear reactor pressure vessel.
Figure 2 shows a more detailed schematic view of a portion of the system shown in Figure 1.
Figure 3 shows a schematic view of an improved system for monitoring the condition of a nuclear reactor pressure vessel.
Figure 4 shows a more detailed schematic view of a portion of the improved system shown in Figure 3.
Figure 5 shows a detailed schematic view of alternate examples of a portion of the improved system shown in Figure 3.

### DESCRIPTION OF THE PREFERRED EXAMPLES

The present invention will now be described more fully hereinafter with reference to the accompanying drawings, in which examples of the invention are shown. The invention may, however, be embodied in many different forms and should not be construed as limited to the examples set forth herein. Rather, these examples are provided so that this disclosure will be thorough and complete, and will fully convey the scope of the invention, defined by the claims, to those skilled in the art. Like numbers refer to like elements throughout.

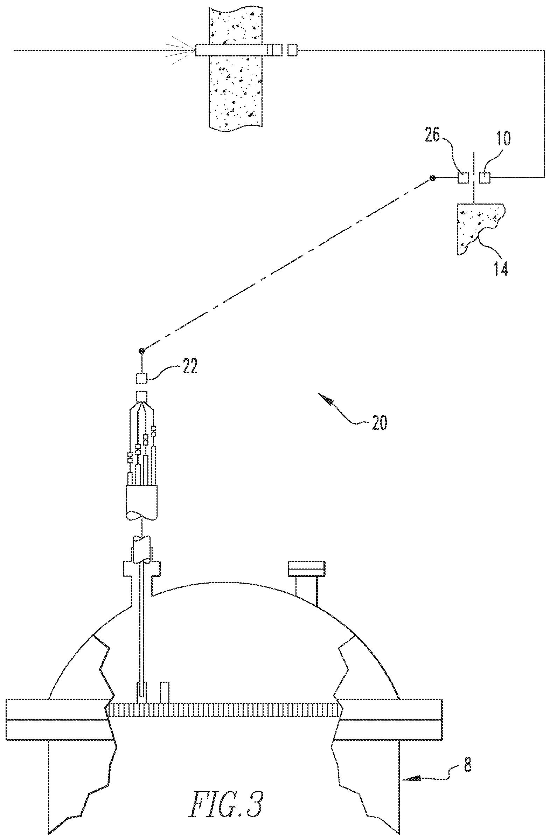

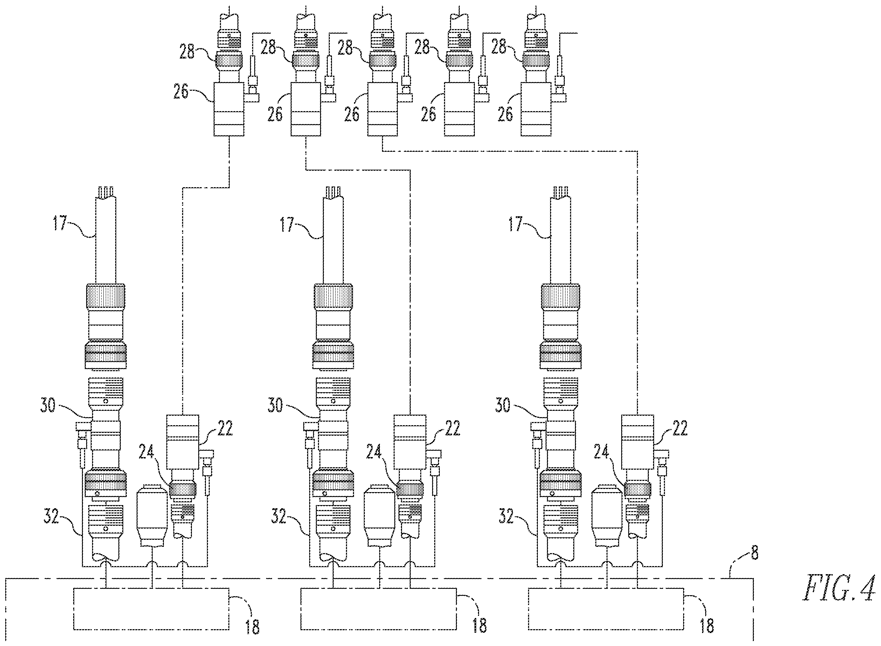

Figures 3 and 4 illustrate an example improved monitoring system 20 that provides for the monitoring of one or more conditions of a nuclear reactor pressure vessel 8 without the need of cable sections 16 (such as those shown in Figures 1 and 2). As shown in Figure 4, the multi pin connectors 10 (shown in Figures 1 and 2) at both ends of the former cable section 16 are replaced with wireless modems 22,26, with each modem 22,26 having a respective integral mating connector assembly 24,28. The modem 22 at the instrument 18 end (i.e. at the reactor vessel 8, Figure 4) is a wireless transmitter electrically coupled to the instrument 18, while the modem 26 at the reactor cavity wall 14 (Figure 3) is a wireless receiver. The term "modem", as used herein, shall be used to refer to a suitable electrical device capable of at least one of sending and receiving wireless transmission signals such as, for example, without limitation, via infrared transmission. The remainder of the rod control position and other instrument signal hardware is not changed from that shown in Figures 1 and 2.

Referring to Figure 4, the transmitter modem 22 is parasitically powered from the power cable 17 for the associated rod control drive mechanisms. This is accomplished by insertion of a double-ended multi pin connector assembly 30 in series with the existing power cable 17 at the multi pin connector on the instrument assembly 18. This double-ended multi pin connector assembly 30 also includes an appropriately sized parasitic bleed power cable 32 that is mated to, and powers, the neighboring transmitter modem 22 and instrument 18. Each modem typically only requires a fraction of a watt to power which has a generally transparent effect on the capacity of the comparably massive power cable 17. Likewise, the voltage potential required to operate the level indication probe (not numbered) could be reduced, if needed, whereas an overly amplified signal is not required or desired at the front end of the modem 22. Therefore, sufficient source power is available without significant additional modification to an existing power cable circuit.

Additionally, expected power supply interruptions from the power cables as a result of instrument operations (i.e. mechanical control rod movement and static retention mode) may be bridged and conditioned within either the modem 22 and/or the double ended connector assembly 30 in the power cable circuit. It also be appreciated that the power for each of the modems 22 could be supplied from alternate power sources found within the reactor vessel assembly (e.g., without limitation, power sources for thermocouples, solenoid operated devices, fan motors, switches, lighting) and/or dedicated power sources (e.g., without limitation, regenerative batteries).

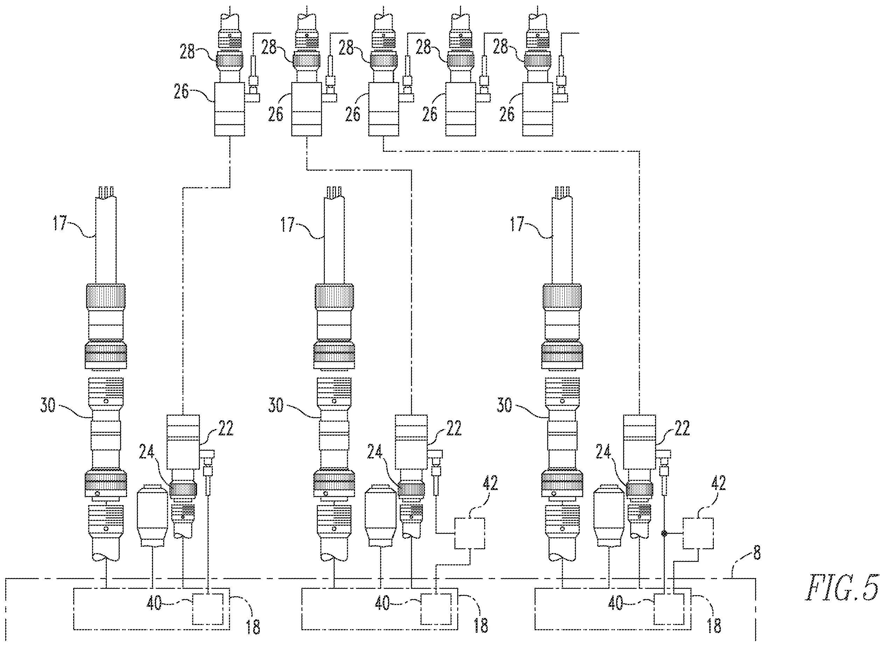

Figure 5 illustrates embodiments of the present invention in which the transmitter modem 22 is powered by voltage produced by a thermocouple 40 (shown schematically) disposed in or on the reactor vessel. As shown in the arrangement in the left portion of Figure 5, the thermocouple 40 may be directly electrically connected to the transmitter modem 22. As shown in the arrangement in the middle of Figure 5, the thermocouple 40 may be electrically connected to a regenerative battery 42 which is electrically connected to the transmitter modem 22. As shown in the arrangement in the right portion of Figure 5, the thermocouple 40 and regenerative battery 42 may both be directly electrically connected to the transmitter modem 22 in a parallel arrangement.

Although shown generally as being electrically connected to only one thermocouple 40, it is to be appreciated that multiple thermocouples 40 and/or regenerative batteries 42 could also be employed to power one or more transmitting modems 22. Such an arrangement provides a) redundancy in the unlikely event that a thermocouple fails and b) excess power which may be utilized to power a more powerful transmitter modem and/or provide faster recharging of the regenerative battery or batteries.

In another example, one or more of the transmitting modems 22 may be bridged with a second transmitting modem (not shown) powered by a different power source. Such redundant arrangement would provide for the second transmitting modem to continue to function should the power source of the transmitting modem 22 fail.

In yet another example, one or more of the transmitting modems 22 may be electrically coupled to a plurality of instruments 18 for detecting and transmitting one or more conditions of the reactor. Such arrangement may be employed to reduce the number of modems 22 needed. Such an arrangement may also be employed to provide redundancy by electrically coupling one instrument to multiple modems 22 (and thus having each modem electrically coupled to multiple instruments 18).

Regardless of the transmitting modem arrangement employed, the receiver modem 26 is installed on the "abandoned" end (i.e. electrical connector 10) of the existing rod position indication cables located at the reactor cavity wall 14 (Figure 3). Preferably each of the receiver modems 26 is installed within the line of sight of each of the corresponding transmitting modems 22. Such line of sight transmission generally minimizes power requirements and the possibility of interference with the transmitted signals.

Each of the receiver modems 26 may be supplied power either from the existing source voltage of the existing rod position indication cable system, parasitically from the associated power cable system, or from an alternate or dedicated power source(s). Each existing signal cable end is assigned a discrete modem 26. That is, if there were fifty signal cables, there would be fifty transmitter modems 22 and fifty receiver modems 26. It is to be appreciated that the modems 22,26 could be combined into a lesser number of larger modems. It is also to be appreciated that the present invention may be incorporated into other in-containment cable instrumentation systems that would benefit from elimination of interconnecting cable assemblies (e.g., without limitation, reactor vessel level indication, containment area radiation monitors and ion chambers). In installations with two or more independent level indication instruments for a particular mechanism, one instrument could be outfitted according to the present invention while the second or others could remain unchanged. Such arrangement would provide additional system redundancy using independent hardware.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of invention which is given by the appended claims.

## Claims

1. A system for monitoring a condition of a nuclear reactor pressure vessel (8) disposed in a radioactive environment, the system comprising:
an instrument (18) structured to monitor a condition of the nuclear reactor pressure vessel (8);
a powered wireless transmitting modem (22) to be disposed in the radioactive environment, the wireless transmitting modem (22) being electrically coupled to the instrument (18);
a receiving modem (26) to be disposed in the line of sight of the transmitting modem (22), the receiving modem (26) being in wireless communication with the transmitting modem (22); and
a signal processing unit electrically coupled to the receiving modem (26), the signal processing unit being structured to determine the condition of the nuclear reactor pressure vessel (8) from the instrument (18),
**characterized in that** the transmitting modem is powered by a thermocouple (40) to be disposed in or on the reactor pressure vessel (8).

2. The system of Claim 1, wherein the transmitting modem (22) is directly powered by a regenerative battery (42) which is charged by the thermocouple (40) to be disposed in or on the reactor pressure vessel (8).

3. The system of Claim 1, wherein the transmitting modem (22) is powered by both a regenerative battery (42) and the thermocouple (40) electrically coupled to the transmitting modem (22) in a parallel arrangement.

4. The system of Claim 1, comprising a plurality of instruments (18) operatively connected with a plurality of wireless transmitting modems (22) for sensing the condition of the reactor pressure vessel (8), and a plurality of receiving modems (26) operatively connected with the signal processing unit for determining the condition of the reactor pressure vessel (8), the plurality of wireless transmitting modems (22) configured to transmit signals to said plurality of receiving modems (26)

5. The system of Claim 1, wherein the instrument (18) comprises a plurality of instruments, each instrument being structured to monitor a condition of the nuclear reactor pressure vessel (8).

6. The system of Claim 1, wherein the powered transmitting modem (22) is bridged with a second powered transmitting modem so that the second transmitting modem will continue to function should its power source fail.

7. The system of claim 1, wherein the wireless transmission comprises an infrared transmission.

8. A method of monitoring a condition of a nuclear reactor pressure vessel (8) disposed in a radioactive environment, comprising:
sensing a condition of the reactor vessel (8) with an instrument (18):
transmitting a signal indicative of the condition of the reactor pressure vessel (8) from the instrument to a powered wireless transmitting modem (22) disposed in the radioactive environment;
wirelessly transmitting a signal indicative of the condition of the reactor pressure vessel (8) from the transmitting modem (22) to a receiving modem (26) in the line of sight of the transmitting modem (22);
transmitting a signal indicative of the condition of the reactor pressure vessel (8) from the receiving modem (26) to a signal processing unit; and
determining the condition of the reactor pressure vessel (8) from the wirelessly transmitted signal,
**characterized in that** the transmitting modem (22) is powered via a thermocouple disposed in or on the reactor pressure vessel (8).

9. The method of Claim 8, wherein the condition of the reactor pressure vessel (8) is sensed by a plurality of instruments (18) operatively connected with a plurality of transmitting modems (22) and wherein the plurality of wireless transmitting modems (22) transmit signals to a plurality of receiving modems (26) operatively connected with the signal processing unit for determining the condition of the reactor pressure vessel (8).

10. The method of Claim 8, wherein the condition of the reactor pressure vessel (8) is determined during power generation operations.

11. The method of Claim 8, wherein the condition of the reactor pressure vessel (8) is determined while the reactor pressure vessel is disassembled.

12. The method of Claim 8, wherein the condition monitored is one of: control rod position, coolant water bulk temperature, coolant water level, radiation level, and ion chamber level.

## Patentansprüche

1. System zur Überwachung eines Zustands eines Kernreaktordruckgefäßes (8), das in einer radioaktiven Umgebung angeordnet ist, wobei das System umfasst:
ein Instrument (18), das aufgebaut ist, um einen Zustand des Kernreaktordruckgefäßes (8) zu überwachen;
ein mit Leistung versorgtes drahtloses Sendemodem (22), das in der radioaktiven Umgebung angeordnet werden soll, wobei das drahtlose Sendemodem (22) elektrisch mit dem Instrument (18) gekoppelt ist;
ein Empfangsmodem (26), das in der Sichtlinie des Sendemodems (22) angeordnet werden soll, wobei das Empfangsmodem (26) in drahtloser Kommunikation mit dem Sendemodem (22) steht;
und
eine Signalverarbeitungseinheit, die elektrisch mit dem Empfangsmodem (26) gekoppelt ist, wobei die Signalverarbeitungseinheit dazu aufgebaut ist, den Zustand des Kernreaktordruckgefäßes (8) aus dem Instrument (18) zu bestimmen,
**dadurch gekennzeichnet, dass** das Sendemodem durch ein Thermoelement (40), das in oder an dem Reaktordruckgefäß (8) angeordnet werden soll, mit Leistung versorgt wird.

2. System nach Anspruch 1, wobei das Sendemodem (22) direkt durch eine wiederaufladbare Batterie (42) mit Leistung versorgt wird, die durch das Thermoelement (40), das in oder an dem Reaktordruckgefäß (8) angeordnet werden soll, geladen wird.

3. System nach Anspruch 1, wobei das Sendemodem (22) sowohl durch eine wiederaufladbare Batterie (42) als auch durch das Thermoelement (40) mit Leistung versorgt wird, die beide mit dem Sendemodem (22) in einer parallelen Anordnung gekoppelt sind.

4. System nach Anspruch 1, umfassend eine Vielzahl von Instrumenten (18), die mit einer Vielzahl von drahtlosen Sendemodems (22) zur Erfassung des Zustands des Reaktordruckgefäßes (8) wirkverbunden sind, und eine Vielzahl von Empfangsmodems (26), die mit der Signalverarbeitungseinheit zur Bestimmung des Zustands des Reaktordruckgefäßes (8) wirkverbunden sind, wobei die Vielzahl von drahtlosen Sendemodems (22) dazu ausgestaltet ist, Signale an die Vielzahl von Empfangsmodems (26) zu übertragen.

5. System nach Anspruch 1, wobei das Instrument (18) eine Vielzahl von Instrumenten umfasst, wobei jedes Instrument dazu aufgebaut ist, einen Zustand des Kernreaktordruckgefäßes (8) zu überwachen.

6. System nach Anspruch 1, wobei das mit Leistung versorgte Sendemodem (22) mit einem zweiten mit Leistung versorgten Sendemodem verbrückt ist, so dass das zweite Sendemodem weiter funktioniert, wenn seine Leistungsquelle ausfallen sollte.

7. System nach Anspruch 1, wobei die drahtlose Übertragung eine Infrarot-Übertragung umfasst.

8. Verfahren zur Überwachung eines Zustands eines Kernreaktordruckgefäßes (8), das in einer radioaktiven Umgebung angeordnet ist, wobei das Verfahren folgende Schritte umfasst:
Erfassen eines Zustands des Reaktorbehälters (8) mit einem Instrument (18);
Übertragen eines Signals, das auf den Zustand des Reaktordruckgefäßes (8) hinweist, von dem Instrument an ein mit Leistung versorgtes drahtloses Übertragungsmodem (22), das in der radioaktiven Umgebung angeordnet ist;
drahtloses Übertragen eines Signals, das auf den Zustand des Reaktordruckgefäßes (8) hinweist, von dem Sendemodem (22) an ein Empfangsmodem (26) in der Sichtlinie des Sendemodems (22);
Übertragen eines Signals, das auf den Zustand des Reaktordruckgefäßes (8) hinweist, von dem Empfangsmodem (26) an eine Signalverarbeitungseinheit; und
Bestimmen des Zustands des Reaktordruckgefäßes (8) aus dem drahtlos übertragenen Signal,
**dadurch gekennzeichnet, dass** das Sendemodem (22) über ein Thermoelement, das in oder an dem Reaktordruckgefäß (8) angeordnet ist, mit Leistung versorgt wird.

9. Verfahren nach Anspruch 8, wobei der Zustand des Reaktordruckgefäßes (8) durch eine Vielzahl von Instrumenten (18) erfasst wird, die mit einer Vielzahl von Übertragungsmodems (22) wirkverbunden ist, und wobei die Vielzahl von drahtlosen Sendemodems (22) Signale an eine Vielzahl von Empfangsmodems (26) überträgt, die mit der Signalverarbeitungseinheit wirkverbunden sind, um den Zustand des Reaktordruckgefäßes (8) zu bestimmen.

10. Verfahren nach Anspruch 8, wobei der Zustand des Reaktordruckgefäßes (8) während des Leistungserzeugungsbetriebs bestimmt wird.

11. Verfahren nach Anspruch 8, wobei der Zustand des Reaktordruckgefäßes (8) bestimmt wird, während das Reaktordruckgefäß auseinandergebaut ist.

12. Verfahren nach Anspruch 8, wobei der überwachte Zustand einer der folgenden ist: Steuerstabstellung, mittlere Kühlwassertemperatur, Kühlwasserstand, Strahlungsmenge und Füllstand der Ionenkammer.

## Revendications

1. Système de surveillance d'un état d'une cuve sous pression (8) de réacteur nucléaire, disposée dans un environnement radioactif, le système comprenant :
un instrument (18) structuré pour surveiller un état de la cuve sous pression (8) de réacteur nucléaire ;
un modem de transmission par voie sans fil alimenté (22), destiné à être disposé dans l'environnement radioactif, le modem de transmission par voie sans fil (22) étant couplé électriquement à l'instrument (18) ;
un modem de réception (26) destiné à être disposé dans le champs de vision du modem de transmission (22), le modem de réception (26) étant en communication par voie sans fil avec le modem de transmission (22) ;
et
une unité de traitement de signaux couplée électriquement avec le modem de réception (26), l'unité de traitement de signaux étant structurée pour déterminer l'état de la cuve sous pression (8) de réacteur nucléaire à partir de l'instrument (18),
**caractérisé en ce que** le modem de transmission est alimenté par un couple thermoélectrique (40) destiné à être disposé dans ou sur la cuve sous pression (8) de réacteur.

2. Système selon la revendication 1, dans lequel le modem de transmission (22) est directement alimenté par une batterie régénérative (42) qui est chargée par le couple thermoélectrique (40) destiné à être disposé dans ou sur la cuve sous pression (8) de réacteur.

3. Système selon la revendication 1, dans lequel le modem de transmission (22) est alimenté par une batterie régénérative (42) et par le couple thermoélectrique (40) qui sont couplés électriquement avec le modem de transmission (22) dans un arrangement parallèle.

4. Système selon la revendication 1, comprenant une pluralité d'instruments (18) reliés de façon opérationnelle avec une pluralité de modems de transmission par voie sans fil (22) pour capter l'état de la cuve sous pression (8) de réacteur, et une pluralité de modems de réception (26) reliés de façon opérationnelle avec l'unité de traitement de signaux pour déterminer l'état de la cuve sous pression (8) de réacteur, la pluralité de modems de transmission par voie sans fil (22) étant configurée à transmettre des signaux à la pluralité de modems de réception (26).

5. Système selon la revendication 1, dans lequel l'instrument (18) comprend une pluralité d'instruments, chaque instrument étant structuré pour surveiller un état de la cuve sous pression (8) de réacteur nucléaire.

6. Système selon la revendication 1, dans lequel le modem de transmission (22) alimenté est ponté avec un second modem de transmission alimenté, de telle manière que le second modem de transmission continue à fonctionner en cas de défaillance de sa source d'alimentation.

7. Système selon la revendication 1, dans lequel la transmission par voie sans fil comprend une transmission par rayonnement infrarouge.

8. Procédé de surveillance de l'état d'une cuve sous pression (8) de réacteur nucléaire, disposée dans un environnement radioactif, le procédé comprenant les étapes consistant à :
capter un état de la cuve de réacteur (8) avec un instrument (18) ;
transmettre un signal indicatif de l'état de la cuve sous pression (8) de réacteur à partir de l'instrument à un modem de transmission par voie sans fil (22) alimenté qui est disposé dans l'environnement radioactif ;
transmettre, par voie sans fil, un signal indicatif de l'état de la cuve sous pression (8) de réacteur à partir du modem de transmission (22) à un modem de réception (26) dans le champs de vision du modem de transmission (22) ;
transmettre un signal indicatif de l'état de la cuve sous pression (8) de réacteur à partir du modem de réception (26) à une unité de traitement de signaux ; et
déterminer l'état de la cuve sous pression (8) de réacteur à partir du signal transmis par voie sans fil,
**caractérisé en ce que** le modem de transmission (22) est alimenté par un couple thermoélectrique disposé dans ou sur la cuve sous pression (8) de réacteur.

9. Procédé selon la revendication 8, dans lequel l'état de la cuve sous pression (8) de réacteur est capté par une pluralité d'instruments (18) reliés de façon opérationnelle avec une pluralité de modems de transmission (22), et dans lequel la pluralité de modems de transmission par voie sans fil (22) transmet des signaux à une pluralité de modems de réception (26) reliés de façon opérationnelle avec l'unité de traitement de signaux, pour déterminer l'état de la cuve sous pression (8) de réacteur.

10. Procédé selon la revendication 8, dans lequel l'état de la cuve sous pression (8) de réacteur est déterminé pendant des opérations de génération de la puissance.

11. Procédé selon la revendication 8, dans lequel l'état de la cuve sous pression (8) de réacteur est déterminé lorsque la cuve sous pression de réacteur est démontée.

12. Procédé selon la revendication 8, dans lequel l'état surveillé est l'un des suivants : la position de barre de commande, la température moyenne de l'eau de refroidissement, le niveau de l'eau de refroidissement, le niveau de rayonnement, et le niveau dans la chambre d'ionisation.
